**Europäisches Patentamt**

**European Patent Office**

**Office européen des brevets**

(19)

(11) Numéro de publication : **0 681 993 A1**

# DEMANDE DE BREVET EUROPEEN

(12)

(21) Numéro de dépôt : **95401079.9**

(22) Date de dépôt : **10.05.95**

(51) Int. Cl.⁶ : **C02F 1/42,** C02F 9/00, C02F 1/00, C02F 1/76, C02F 1/50, B01J 47/02, B01J 47/00

(30) Priorité : **11.05.94 RU 94017604**
**11.05.94 RU 94017603**

(43) Date de publication de la demande :
**15.11.95 Bulletin 95/46**

(84) Etats contractants désignés :
**AT BE CH DE DK ES FR GB GR IE IT LI LU NL PT SE**

(71) Demandeur : **M-SIT FRANCE**
**5, rue d'Aguesseau**
**F-75008 Paris (FR)**

(72) Inventeur : **Rakhmanin, Jurî**
**rue Seleznevskaya, 30-3-83**
**Moscou (RU)**
Inventeur : **Maslioukov, Alexandre**
**rue Novatorov, 34-3-76**
**Moscou (RU)**
Inventeur : **Saprikin, Victor**
**rue Entouziastov, 11/1-46**
**Balachikha, Moscou (RU)**
Inventeur : **Orlov, Alexandre**
**Rue Pobedi, 4-43**
**Balachikha, Moscou (RU)**
Inventeur : **Zverev, Mikhail**
**Rue Pervomayskaya, 21-45**
**Mitistchi, Moscou (RU)**

(74) Mandataire : **Jacquard, Philippe et al**
**CABINET ORES,**
**6, Avenue de Messine**
**F-75008 Paris (FR)**

(54) **Dispositif multicouches pour la désinfection et la purification de l'eau.**

(57) L'invention concerne un dispositif pour la désinfection et la purification de l'eau du type comportant au moins un matériau échangeur d'ions. Il comporte :

— au moins une couche de résine échangeuse d'ions contenant de l'iode et fortement basique ;

— au moins une couche de matériau adsorbant contenant de l'argent ou de mélange d'un matériau adsorbant carboné et d'un matériau adsorbant contenant de l'argent.

FIG. 1 a

EP 0 681 993 A1

La présente invention concerne un dispositif d'obtention d'une eau potable de qualité, notamment une cartouche filtrante éventuellement interchangeable ou bien encore à un dispositif individuel par exemple en forme de stylo, pour la désinfection et l'affinage dans des conditions domestiques d'une eau en provenance du réseau, d'une source ou d'un forage.

On connaît un dispositif de filtration pour épurer l'eau dans les conditions domestiques qui comprend une capacité présentant à sa partie supérieure un entonnoir et une cartouche interchangeable remplie de matériau filtrant ou d'une charge absorbante et fermé par un élément filtrant à lamelles. L'eau est introduire dans l'entonnoir, traverse la cartouche sous l'influence des forces de gravitation et pénètre dans la capacité (Brevet URSS, 1801024 déposé par la Société BRITT WASSER et publié en 1993). Comme l'ont montré les recherches du requérant, ce dispositif n'assure pas l'épuration et la désinfection de l'eau jusqu'à satisfaire les exigences des normes sanitaires et hygiéniques.

On connaît également une cartouche interchangeable pour dispositif sans pression (dépôt de RFA 3535677, 1987). Cette cartouche comprend un corps, à l'intérieur duquel est disposée une charge en matériau utile - résine échangeuse d'ions et/ou charbon actif et/ou matériau bactéricide. Les parois situées aux extrémités supérieure et inférieure du corps présentent des orifices d'entrée et de sortie ayant une grande quantité de fines fentes. La cartouche présente une bague à l'aide de laquelle elle est fixée sur l'orifice de l'entonnoir. L'eau qui a traversé la cartouche arrive dans la capacité inférieure qui présente un bec et une anse pour la commodité d'emploi (du type d'une carafe). Cette cartouche connue, comme la précédente, n'assure pas l'épuration et la désinfection de l'eau simultanément pour tous les critères correspondant à une conformité avec les exigences hygiéniques réglementaires. Ainsi, la cartouche élimine de façon insuffisante de l'eau les sels des métaux lourds, les produits du pétrole, les détergents, les phénols et de même elle ne désinfecte pas l'eau des bactéries, virus et helminthes, pour sa capacité de fonctionnement prévue pour 250 à 300 l.

La présente invention a pour objet un dispositif qui assure une épuration et une désinfection efficaces de l'eau jusqu'au niveau d'hygiène requis. Plus particulièrement, dans le cas d'une cartouche filtrante, l'invention a pour objet une cartouche ayant une capacité de service importante, pouvant par exemple aller jusqu'à 500 litres.

L'invention concerne également un dispositif individuel, notamment un dispositif individuel portatif permettant à un utilisateur d'obtenir de l'eau potable à partir de sources non traitées.

On connaît un tel dispositif pour la purification et la désinfection de l'eau sous la forme d'un tube fin, permettant au consommateur d'aspirer l'eau à l'aide de la bouche. Le tube possède successivement des sections depuis l'arrivée de l'eau jusqu'à sa sortie contenant : un matériau filtrant initial qui est une fibre de polyester constituant une première section, une deuxième section avec une résine triiodique échangeuse d'ions, une troisième section avec de nouveau un matériau filtrant identique au matériau filtrant initial, une quatrième section avec des granulés de charbon actif et enfin une cinquième section avec de nouveau de la fibre polyester (Brevet US-4 298 475, 1981). Comme l'ont montré les recherches comparatives du requérant, ce dispositif connu présente un certain nombre de défauts : une capacité de service limitée (10 à 15 l) pour l'eau non traitée (rivières, lacs, marais), contenant une quantité considérable d'impuretés d'origine organique et non organique. Qui plus est, ce dispositif connu apparaît être insuffisamment efficace du point de vue de la désinfection de l'eau des bactéries et des virus étant donné qu'il n'assure pas la désinfection réglementaire de l'eau.

Des conditions plus strictes de purification de l'eau des bactéries sont obtenues à l'aide du dispositif individuel, selon le Brevet US-4 995 976, 1991. Ce dispositif comprend un tube en polymère fermé aux deux extrémités à l'aide de capuchons étanches (quand le dispositif ne fonctionne pas). Le tube comprend des couches successives de charge désinfectante et adsorbante, séparées par des cloisons poreuses. Après le filtre amovible sur l'arrivée de l'eau, un plastique poreux pour l'élimination des particules et de la boue, se trouve une couche de résine pentacide échangeuse d'anions, qui tue une partie importante des bactéries et des organismes présents dans l'eau, puis une couche de granulés de charbon actif pour l'amélioration du goût, pour l'élimination de l'odeur et de l'iode résiduel, et une couche de résine triocide, qui empêche la pénétration des bactéries dans l'eau purifiée, de même que l'infection par les bactéries du charbon actif et de l'embouchure. Cependant, la présence de résine triocide a une action négative sur les propriétés organoleptiques. De plus, le dispositif ne désinfecte quand même pas assez des bactéries et des virus. L'augmentation du nombre de couches du matériau de remplissage aboutit à la diminution de la vitesse du passage de l'eau (jusqu'à être peu confortable) et à la réduction de la capacité de service du dispositif.

La présente invention a également pour objet un dispositif individuel de dimensions minimales et de manipulation pratique, efficace en ce qui concerne l'élimination de la pollution bactérienne, de la microflore virale et de l'épuration des substances toxiques, (comme les métaux lourds, les radionucléides, les pesticides) avec une vitesse confortable de boisson et une capacité importante de service du dispositif.

Sous sa forme la plus générale, l'invention concerne un dispositif caractérisé en ce qu'il comporte :
- éventuellement au moins une couche de matériau adsorbant à base de carbone ayant une surface totale

EP 0 681 993 A1

des pores d'au moins 1100 m²/g et un volume des pores d'au moins 0,4 cm³/g ;
- éventuellement au moins une couche d'un matériau d'échange cationique ayant une capacité d'échange d'au moins 4,5 mg éq/g ;
- au moins une couche de résine échangeuse d'ions contenant de l'iode et fortement basique ;
- au moins une couche de matériau adsorbant contenant de l'argent ou de mélange d'un matériau adsorbant carboné et d'un matériau adsorbant contenant de l'argent.

La fonction de la résine échangeuse d'ions contenant de l'iode I et de type fortement basique, par exemple une résine ayant une composition granulométrique comprise entre 0,3 et 1 mm, et ayant une formule de base $R - CH_2 - N^+I^-_n$, n étant compris entre 3 et 7, est la désinfection de l'eau grâce à la régénération dans l'eau des combinaisons de l'iode.

Le matériau adsorbant contenant de l'argent (avec par exemple une teneur de 1% en argent) remplit une double fonction. La première fonction est l'absorption des éléments organiques de l'eau. La deuxième fonction est remplie en synergie avec la résine échangeuse d'ions contenant de l'iode et fortement basique, et consiste en la désinfection de l'eau en augmentant la concentration en désinfectant le plus efficace ($I^+.H_2O$) selon la réaction :

$$I_2 + Ag^+ + H_2O ------> I^+.H_2O + AgI$$

L'idée de base de l'invention est ainsi l'association dans un dispositif de désinfection et de purification de l'eau, d'une résine échangeuse d'ions contenant de l'iode et fortement basique et d'un matériau adsorbant contenant de l'argent et plus particulièrement des ions $Ag^+$, qui améliore la désinfection de l'eau.

Le matériau adsorbant à base de carbone se présente avantageusement sous forme de granulés d'une taille allant de 0,3 à 1, 0 mm et de préférence sous forme de fibres dont le poids est d'au moins 500 g/m².

La résine échangeuse d'ions contenant de l'iode et fortement basique a de préférence une composition granulométrique comprise entre 0,3 et 1,0 mm.

Le matériau adsorbant contenant de l'argent se présente de préférence sous forme d'adsorbant carboné imprégné d'argent avec une surface totale des pores d'au moins 1100 m²/g et un volume de micropores d'au moins 0,4 cm³/g.

Le matériau contenant de l'argent peut de préférence se présenter sous forme d'un matériau d'échange cationique en granulés ou en fibres avec une capacité d'échange d'au moins 2,0 mg éq./g et contenant de l'$Ag^+$ en qualité d'ion inverse.

Il est avantageux que le dispositif comporte, en amont et/ou en aval de ladite couche de résine, une couche dudit matériau d'échange cationique, séparant la couche de résine d'au moins une couche de matériau adsorbant à base de carbone, pour éviter la migration de l'iode lors du stockage.

Le dispositif selon l'invention peut également comporter au moins une couche d'un matériau d'échange anionique.

Le matériau d'au moins une couche d'échange cationique et/ou d'au moins une couche d'échange anionique est de préférence un matériau fibreux.

D'une manière générale, un matériau fibreux présente une plus grande surface d'absorption qu'un matériau granulé et présente de ce fait une absorption plus efficace des additifs ou éléments organiques ou non organiques de l'eau.

Selon une variante correspondant à une cartouche filtrante, le dispositif selon l'invention est caractérisé en ce qu'il comporte un corps de cartouche dans lequel sont disposées lesdites couches dans l'ordre suivant dans le sens du parcours de l'eau à purifier une couche d'un dit matériau adsorbant à base de carbone, une couche d'un dit matériau d'échange cationique, une couche d'une dite résine échangeuse d'ions contenant de l'iode et fortement basique, et une couche d'un dit matériau adsorbant contenant de l'argent.

Le dispositif peut être caractérisé en ce qu'il comporte un corps de cartouche dans lequel sont disposées lesdites couches dans l'ordre suivant dans le sens de parcours de l'eau à purifier : une couche $\underline{a}$ d'une dite résine échangeuse d'ions contenant de l'iode et fortement basique, une couche $\underline{b}$ d'un dit matériau d'échange cationique, au moins une couche $\underline{c}$ d'un dit matériau adsorbant à base de carbone, et une couche d d'un dit matériau adsorbant contenant de l'argent.

Le dispositif peut être alors caractérisé en ce qu'il comporte, en amont de ladite couche de résine échangeuse d'ions, successivement une couche $\alpha_1$ d'un dit matériau adsorbant à base de carbone et une couche $\alpha_2$ d'un dit matériau d'échange cationique et/ou en ce que ladite au moins une couche de matériau adsorbant à base de carbone comporte successivement une couche $\underline{c}_1$ de matériau fibreux adsorbant à base de carbone et une couche $\underline{c}_2$ de matériau adsorbant à base de carbone. Dans ce dernier cas, le dispositif peut être avantageusement caractérisé en ce que le rapport volumique des couches est compris entre les valeurs suivantes, dans l'ordre des couches :
- 1,4 à 2,1 pour ladite couche $\alpha_1$ de matériau adsorbant carboné ;
- 0,5 et 1 pour ladite couche $\underline{\alpha}_2$ de matériau d'échange cationique ;

3

- 2,5 et 3 pour ladite couche $\alpha$ de résine échangeuse d'ions contenant de l'iode et fortement basique 1, par définition, pour la couche b de matériau d'échange cationique prise comme référence ;
- 1,4 et 2,1 pour ladite couche $c_1$ de matériau fibreux adsorbant à base de carbone ;
- 4 et 6 pour ladite couche $c_2$ de matériau adsorbant à base de carbone ;
- 3 et 5 pour ladite couche d de matériau adsorbant contenant de l'argent.

On notera que la présence de plusieurs couches de matériau adsorbant carboné contribue à une absorption efficace des différents éléments chimiques contenus dans l'eau.

Selon un premier mode de réalisation particulièrement avantageux, le dispositif est caractérisé en ce que les couches sont dans le rapport volumique suivant :

$\alpha_1$    2,1
$\alpha_2$    1
a    2,5
b    1 (par définition)
$c_1$    1,4
$c_2$    6
d    3

Selon un deuxième mode de réalisation particulièrement avantageux, le dispositif est caractérisé en ce que les couches sont dans le rapport volumique suivant :

$\alpha_1$    1,4
$\alpha_2$    0,5
a    3
b    1 (par définition)
$c_1$    2,1
$c_2$    4
d    5

Selon un troisième mode de réalisation particulièrement avantageux, le dispositif est caractérisé en ce que les couches sont dans le rapport volumétrique suivant :

$\alpha_1$    1,4
$\alpha_2$    1
a    3
b    1 (par définition)
$c_1$    2,1
$c_2$    4
d    3

L'invention concerne également un dispositif individuel, notamment un dispositif individuel portatif, caractérisé en ce qu'il comporte un tube externe présentant une pluralité de couches de désinfection et/ou de purification et un tube interne déplaçable dans le tube externe et comportant également une pluralité de couches de désinfection et/ou de purification.

Ce dispositif peut être avantageusement caractérisé en ce que, en aval du tube extérieur dans le sens d'écoulement de l'eau est formée une surface conique interne, et en amont du tube interne est formée une surface conique externe, lesdites surfaces coniques étant superposables par déplacement du tube interne dans le tube externe pour former une jonction étanche et dégager le cas échéant un espace libre améliorant les paramètres hydrodynamiques du dispositif.

Le tube interne peut comporter au moins une couche de résine échangeuse d'ions contenant de l'iode et fortement basique et au moins une couche de matériau adsorbant contenant de l'argent ou de mélange d'un matériau adsorbant carboné et d'un matériau adsorbant contenant de l'argent.

Il est avantageux que le dispositif soit caractérisé en ce que le tube externe comporte, dans le sens d'écoulement de l'eau, successivement une couche de matériau, de préférence fibreux, d'échange cationique, de matériau d'échange anionique et de matériau adsorbant à base de carbone et de préférence en ce que le rapport volumique desdites couches est compris entre 1 et 2 pour la couche de matériau d'échange cationique, 1 et 3 pour la couche b' de matériau d'échange anionique, 1 et 2 pour la couche de matériau adsorbant à base de carbone.

Il est avantageux que le dispositif soit caractérisé en ce que le tube interne comporte, dans le sens d'écoulement de l'eau, successivement une couche a' de matériau adsorbant carboné, une couche b' de résine échangeuses d'anions contenant de l'iode et fortement basique, une couche c' de matériau, de préférence fibreux, d'échange cationique, une couche d' de matériau, de préférence fibreux, d'échange anionique, et une couche e' de mélange de matériau adsorbant à base de carbone et de matériau adsorbant contenant de l'argent. Le rapport volumique desdites couches est avantageusement compris entre 1 et 2 pour la couche a', 3 et 5 pour la couche b' 2 et 3 pour la couche c', 3 et 6 pour la couche d', et 0,5 et 2 pour la couche e'.

D'autres caractéristiques et avantages de l'invention apparaîtront mieux à la lecture de la description qui va suivre, donnée à titre d'exemple non limitatif, en liaison avec les dessins, dans lesquels :

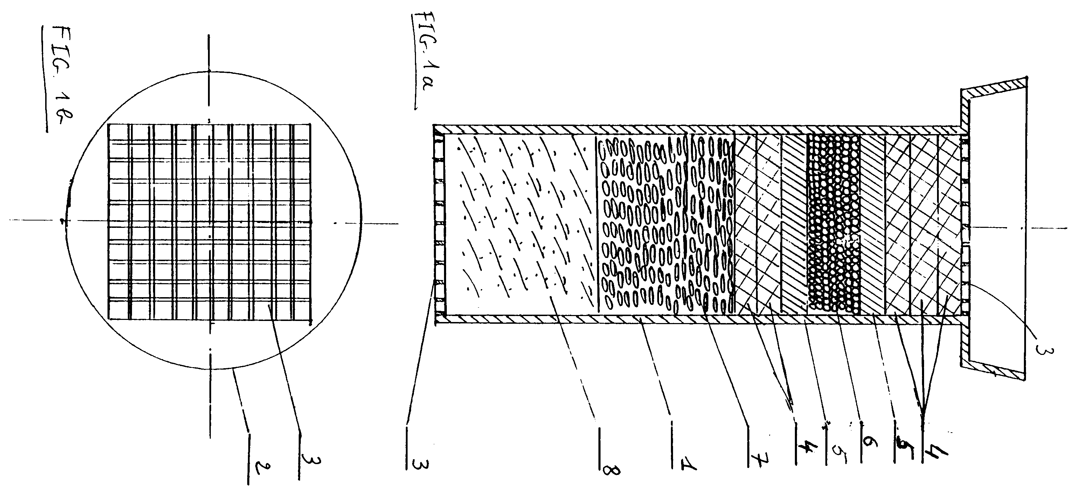

- les figures 1a et 1b représentent respectivement en coupe verticale et en vue de dessus une première variante de l'invention se présentant sous forme de cartouche :

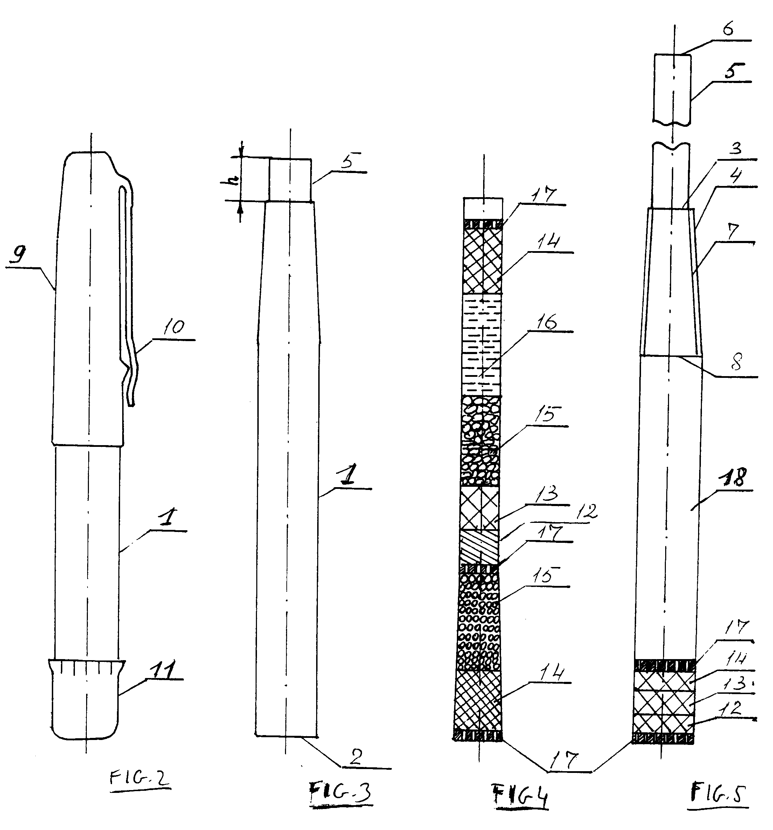

- et les figures 2 à 5 représentent une deuxième variante de l'invention se présentant sous forme d'un dispositif individuel portatif en forme de stylo, respectivement sous forme d'une vue d'ensemble au stockage et au transport (fig. 2), sous forme d'une vue avec enlèvement des capuchons (fig. 3), sous forme d'une coupe verticale du tube intérieur (fig.4) et sous forme d'une coupe verticale du dispositif en fonctionnement (fig.5).

La cartouche filtrante représentée aux figures la et lb comprend un corps 1 dans lequel, entre des parois perforées, est disposé un matériau échangeur de cations, un adsorbant carboné et un bactéricide. La cartouche filtrante selon l'invention contient un matériau fibreux échangeur de cations avec une capacité d'échange d'au moins 4,5 mg.éq./g, un matériau carboné adsorbant bactéricide avec une surface totale des pores d'au moins 1100 m$^2$/g et un volume des pores d'au moins 0,4 cm$^2$/g. De plus, la cartouche comprend consécutivement dans le sens du passage de l'eau des couches de matériau fibreux adsorbant carboné, de matériau fibreux d'échange cationique, de résine échangeuse d'ions contenant de l'iode et fortement basique, de matériau fibreux d'échange cationique, de matériau fibreux adsorbant carboné, de matériau adsorbant carboné et de matériau adsorbant contenant de l'argent avec le rapport volumique suivant des couches (2,1:1:2,5:1:1,4:6:3) ou (1,4:0,5:3:1:2,1:4:5).

Le matériau adsorbant carboné peut être utilisé ou bien sous forme de granulés d'une taille de 0,3 à 1,0 mm, ou bien sous forme de fibres avec un poids d'au moins 500 g/m$^2$. La composition granulométrique de la résine échangeuse d'ions peut être comprise entre 0,3 et 1,0 mm. L'adsorbant contenant de l'argent peut se présenter ou bien sous forme d'adsorbant carboné imprégné d'argent avec une surface totale des pores d'au moins 1100 m$^2$/g, un volume des micropores d'au moins 0,4 cm$^3$/g ou bien sous forme de matériau échangeur de cations en granulés ou fibres avec une capacité d'échange supérieure ou égale à 2,0 mg.éq./g, contenant de l'Ag$^+$ en qualité d'ion inverse.

La cartouche filtrante comprend un corps 1, une bride 2 pour installer la cartouche dans l'entonnoir de la capacité, des grilles en "Capron" 3, et les couches dans le sens du parcours de l'eau : du matériau fibreux adsorbant carboné 4 (en trois sous-couches), du matériau fibreux d'échange cationique 5, de la résine échangeuse d'ions contenant de l'iode et fortement basique 6, du matériau fibreux d'échange cationique 5, du matériau fibreux adsorbant carboné 4 (en deux sous-couches), du matériau adsorbant carboné 7 et du matériau adsorbant contenant de l'argent 8 avec le rapport volumique suivant les sept couches précitées : (2,1:1:2,5:1:1,4:6:3) ou (1,4:0,5:3:1:2,1:4:5).

La cartouche filtrante est placée de manière connue en soi dans un entonnoir qui recueille l'eau filtrée. La bride 2 retient la cartouche dans l'entonnoir. L'eau arrive par la grille en "Capron" 3, traverse consécutivement toutes les couches 4, 5, 6, 5, 4, 7, 8 sous l'action des forces de gravitation et sort au travers de la grille 3 dans la partie inférieure de la cartouche filtrante dans la capacité de recueil de l'eau épurée.

Les possibilités de fonctionnement du dispositif ont été définies par sa capacité d'écoulement (capacité de service), la vitesse de passage de l'eau au travers du dispositif et par le degré d'épuration et d'efficacité de la désinfection.

La capacité d'écoulement du dispositif a été définie selon la quantité d'eau l'ayant traversé jusqu'à ce que la vitesse finale de traversée de l'eau dans le dispositif devienne le tiers de la vitesse initiale. La vitesse de passage de l'eau a été définie suivant la quantité de ml d'eau ayant traversé la dispositif pendant 1 mn.

L'efficacité d'épuration des impuretés toxiques a été évaluée selon le pourcentage entre la concentration de ces impuretés dans l'eau initiale et celle dans l'eau après traversée du dispositif. L'efficacité d'épuration de la pollution microbiologique a été définie d'après la teneur de la microflore dans l'eau épurée.

Dans les exemples sont indiquées les variantes concrètes de fonctionnement du dispositif.

EXEMPLE 1 :

La cartouche filtrante comprend les 7 couches suivantes sur le parcours de l'eau :

1) un matériau fibreux adsorbant carboné, disposé en trois sous-couches ;

2) un matériau fibreux d'échange cationique avec une capacité d'échange d'au moins 4,5 mg.éq/g (polymère à base de polyacrylonitrile assemblé par couture) ;

3) de la résine contenant de l'iode et fortement basique avec une composition granulométrique de 0,3 à 1,0 mm, une formule de base R-CH$_2$-N$^+$I$^-_n$, où R est un copolymère de styrol et de bivinylbenzène, et n=3-7 ;

4) une couche de matériau similaire à celui de la couche 2 ;

5) du matériau fibreux adsorbant carboné, identique à celui du 1), mais disposé en 2 sous-couches ;

6) du matériau adsorbant carboné avec une surface totale des pores d'au moins 1100 m²/g et un volume des pores d'au moins 0,4 cm³/g sous forme de granulés d'une taille allant de 0,3 à 1,0 mm ;

7) du matériau adsorbant contenant de l'argent sous forme d'un adsorbant carboné imprégné d'argent avec une surface totale des pores d'au moins 1100 m²/g, un volume des micropores d'au moins 0,4 cm³/g et une teneur en Ag de 1% par rapport à la masse du matériau.

Dans ce cas le rapport volumique des couches est de :

2,1:1:2,5:1:1,4:6:3. La vitesse initiale de filtration est de 150 ml/mn, et la capacité de service est de 500 1. Les résultats de l'évaluation hygiénique de la cartouche filtrante sont reportés dans le tableau 1.

La présence des couches de matériau fibreux 2) et 4) d'échange de cations avant et après, la couche 3) de résine échangeuse d'ions permet de séparer la résine de l'adsorbant carboné et d'éviter la migration de l'iode au charbon pendant le stokage à long terme.

EXEMPLE 2 :

La cartouche filtrante comprend les mêmes couches que dans l'exemple 1, à l'exclusion du fait que le matériau carboné adsorbant est utilisé sous forme de fibres d'un poids d'au moins 500 g/m², tandis que le matériau adsorbant à teneur d'argent est sous forme de matériau granulé d'échange de cations avec une capacité d'échange d'au moins 2,0 mg.éq./g contenant de l'Ag⁺ en qualité d'ion inverse ; dans ce cas, la correspondance volumique des couches est de 1,4:0,5:3:1:2,1:4:5. La vitesse initiale de filtration est de 155 ml/mn et la capacité de service est de 500 l.

EXEMPLE 3 :

La cartouche filtrante comprend les mêmes couches que dans l'exemple 2, à l'exclusion du fait que, pour le matériau contenant de l'argent, on utilise du matériau fibreux d'échange cationique avec une capacité d'échange d'au moins 2,0 mg.éq./g, contenant de l'Ag⁺ sous forme d'ion inverse. Le rapport des couches est de : 1,4:1:3:1:2,1:4:3. La vitesse initiale de filtration est de 150 ml/mn, la capacité de service de 500 l.

Les essais d'évaluation des propriétés organoleptiques de l'eau après épuration ont montré qu'en passant les 500 l, la cartouche filtrante assure l'élimination de l'odeur de l'eau pour une valeur initiale allant jusqu'à 3-4 points, la turbidité de l'eau épurée prise du réseau s'est abaissée de 80 à 100%, pour une teneur initiale de l'impureté $SiO_2$ de 0,3 à 1,2 mg/l la couleur de l'eau étant abaissée en moyenne de 55%.

Ainsi, sur la base des résultats des recherches bactériologiques, virologiques, parasitologiques, organoloptiques, physico-chimiques, de même que d'après les données des biotests, on peut tirer la conclusion que la cartouche filtrante présentée désinfecte et affine de façon efficace l'eau du réseau en éliminant des impuretés non-organiques et organiques avec une capacité de service de 500 l.

L'efficacité de l'épuration de l'eau obtenue en utilisant la cartouche filtrante décrite dans les exemples ci-dessus pour un débit de 500 l d'eau est montrée dans le Tableau 1 ci-après.

TABLEAU 1

| Désignation des produits ou des micro-organismes polluant l'eau | Pollution initiale de l'eau | Efficacité de l'épuration, % | | |
|---|---|---|---|---|
| | | Exemple 1 | Exemple 2 | Exemple 3 |
| chlore résiduel libre | 1 CMA | 95 | 98 | 98 |
| chrome | 3 CMA | 90 | 91 | 92 |
| nickel | 3 CMA | 95 | 90 | 93 |
| cadmium | 3 CMA | 94 | 94 | 94 |
| aluminium | 3 CMA | 89 | 90 | 90 |
| plomb | 3 CMA | 67 | 67 | 67 |
| cuivre | 3 CMA | 95 | 99 | 98 |
| cobalt | 3 CMA | 96 | 96 | 96 |
| fer | 3 CMA | 87 | 86 | 87 |
| chloroforme | 3 CMA | 96 | 96 | 93 |
| tétrachlorure de carbone | 3 CMA | 86 | 88 | 98 |
| produits du pétrole | 0,6 mg/l | en conformité avec les | | |
| détergents | 0,8 mg/l | exigences sanitaires et hygiéniques | | |
| phénol | 0,005 mg/l | 90 | 91 | 90 |
| indice des coliformes | 1000 ?GKP/l | en conformité avec les | | |
| indice microbien total | 1000 cellules/l | exigences sanitaires et hygiéniques | | |
| salmonelles | ?-3,8 x 10 cellules/l | 100 | 100 | 100 |
| clostridium | 7?-2,3.$10^2$ cellules/l | 100 | 100 | 100 |
| bâtonnet donnant du pus bleu | 1,64+-0,221 g TCD?/50/l | 100 | 100 | 100 |
| virus de la poliomyélite | 30-80 BOE /n | 100 | 100 | 100 |
| coliphage T1 | 5 exemplaires/l | 100 | 100 | 100 |
| phage MS2 | 5 exemplaires/l | 100 | 100 | 100 |
| oeufs d'helminthe | 5 exemplaires/l | 100 | 100 | 100 |
| oncosphères de ??? du boeuf | 5 exemplaires/l | 100 | 100 | 100 |
| cystes de lamblia | 5 exemplaires/l | 100 | 100 | 100 |
| oocystes de cryptospode | 5 exemplaires/l | 98,6 | 97 | 98 |

Notes du traducteur:
CMA= concentration maximale admissible

EP 0 681 993 A1

Le dispositif individuel portatif comporte deux tubes, placés l'un dans l'autre avec un déplacement vertical. De plus dans la première section du tube extérieur, sur le parcours de l'eau, est formée une surface conique interne 4, alors que dans l'extrémité inférieure interne est présente une surface conique externe 7 avec la possibilité de superposition de ces surfaces coniques et de formation d'une jonction étanche lors du déplacement axial du tube interne 5. La partie externe de tube 1, indépendante du tube interne 5, est composée de couches successives de matériau fibreux d'échange cationique, de matériau fibreux d'échange anionique, de matériau adsorbant carboné, tandis que le tube interne 5 comporte des couches successives de matériau adsorbant carboné, de résine échangeuse d'anions contenant de l'iode et fortement basique, de matériau fibreux d'échange cationique, de matériau fibreux d'échange anionique, de mélange de matériau adsorbant carboné et de matériau adsorbant contenant de l'argent avec une capacité d'échange du matériau fibreux cationique d'au moins 4,5 mg éq./g, du matériau fibreux anionique d'au moins 2,0 mg.éq./g et une surface totale des pores du matériau adsorbant carboné d'au moins 1100 m$^2$/g et un volume des micropores d'au moins 0,4 cm$^3$/g.

A l'entrée et à la sortie du dispositif sont placés des capuchons étanches 9 et 11 tandis que les couches de matériau (là où cela est nécessaire) sont séparées par des grilles 17 en polymères.

Le dispositif selon la présente invention se distingue de l'Art Antérieur précité par la présence d'un deuxième tube, et/ou par des particularités constructives des tubes, et/ou par la composition de la charge, et/ou par la capacité d'échange des matériaux fibreux cationique et anionique, et/ou par la surface totale des pores et/ou par le volume des pores du matériau adsorbant carboné.

Les rapports volumiques entre les couches des tubes externe et interne peuvent être respectivement (1-2): (1-3): (1-2) et (1-2): (3-5): (2-3): (3-6): (0,5-2) . La composition granulométrique du matériau adsorbant carboné peut être de 0,3 à 1,0 mm. Le poids de sa fibre et des fibres des matériaux d'échange cationique et anionique peut être d'au moins 500 g/m$^2$. La composition granulométrique de la résine échangeuse d'ions peut être de 0,3 à 1,0 mm. Le matériau adsorbant contenant de l'argent peut être sous forme d'adsorbant carboné imprégné d'argent avec une surface totale des pores d'au moins 1100 cm$^3$/g et un volume de micropores d'au moins 0,4 cm$^3$/g, ou bien sous forme d'un matériau échangeur de cations en granulés ou fibres avec une capacité d'échange d'au moins 2 mg.éq./g, contenant de l'Ag$^+$ en qualité d'ion inverse.

Lors du déplacement axial du tube interne 5 jusqu'à obtention de l'étanchéité du dispositif lors de la superposition des surfaces coniques 4 et 7 des tubes 1 et 5, il se constitue entre les couches de charge des tubes interne et externe un espace libre 18 améliorant les paramètres hydrodynamiques du dispositif, ce qui permet d'utiliser les huit couches de remplissage (dans l'exemple de réalisation décrit), dont une partie est faite de matériaux fibreux avec des propriétés hautement adsorbantes, tout en conservant une capacité de débit élevée et une vitesse confortable de boisson. D'autre part, au repos le dispositif se plie et est pratique à porter sous forme d'un stylo, ne dépassant pas 15 cm de haut. Le dispositif purifie l'eau de façon efficace des bactéries, des virus et des matières toxiques.

Le dispositif individuel portatif est constitué (voir les figures 2 à 5) d'un tube extérieur en polymère 1 avec une ouverture pour l'entrée de l'eau 2.

Près de l'extrémité supérieure 3 dans le sens de l'écoulement de l'eau est formée une surface conique interne 4, un tube interne 5 en polymère, se déplaçant dans le tube extérieur 1 sur la hauteur h, avec une ouverture de sortie 6 et avec une surface conique extérieure 7 près de l'extrémité inférieure 8.

Le dispositif contient de même un capuchon 9 avec une fixation latérale 10 pour fixer le dispositif lors de son transport et un capuchon 11.

Le tube extérieur 1 en polymère, dans le sens de l'écoulement de l'eau, renferme une couche 12 en matériau fibreux cationique avec une capacité d'échange d'au moins 4,5 mg.éq./g, une couche 13 de matériau fibreux anionique avec une capacité d'échange d'au moins 2 mg.éq./g et une couche 14 de matériau adsorbant carboné avec une surface totale des pores d'au moins 1100 m$^2$/g et un volume des micropores d'au moins 0,4 cm$^3$/g, le rapport volumique entre lesquels est de (1-2):(1-3):(1-2).

Le tube interne 5 en polymère dans le sens de l'écoulement de l'eau, contient une couche 14 de matériau adsorbant carboné, une couche 15 de résine échangeuse d'anions contenant de l'iode et fortement basique avec une composition granulométrique de 0,3 à 1,0 mm, une couche 12 de matériau fibreux d'échange cationique, une couche 13 de matériau fibreux d'échange anionique, éventuellement une deuxième couche 15, et enfin une couche 16 qui est un mélange de matériau adsorbant carboné et de matériau adsorbant contenant de l'argent avec un rapport volumique de 1:1. Les couches sont séparées par des grilles en polymères 17. Les rapports volumiques des couches sont de (1-2):(3-5):(2-3):(3-6) : (0,5-2). En aval de la couche 16, peut éventuellement se trouver une nouvelle couche 14.

Le dispositif fonctionne de la façon suivante : on enlève les capuchons 9 et 11, puis on déplace dans le sens axial le tube interne 5 jusqu'à la superposition des surfaces coniques 4 et 7 (fig. 5) et la formation de la jonction étanche des deux tubes 1 et 5. Puis on abaisse dans l'eau l'extrémité du tube 1 pourvue de l'ouverture 2. A travers l'ouverture 2, les couches de la charge du tube 1 (12, 13, 14), l'espace libre 18, puis les couches de charge du tube 5 (14,15,12,13,16) l'eau arrive dans la bouche de l'utilisateur lors de l'aspiration à travers l'ouverture 6.

Les capacités de fonctionnement du dispositif ont été définies par sa capacité d'écoulement, la vitesse de passage de l'eau au travers du dispositif et par le degré d'épuration et d'efficacité de la désinfection. La capacité d'écoulement du dispositif a été définie selon la quantité d'eau l'ayant traversé jusqu'à ce que la vitesse finale de traversée de l'eau dans le dispositif devienne le tiers de la vitesse initiale. La vitesse de passage de l'eau à travers le dispositif a été définie suivant la quantité de ml d'eau ayant traversé le dispositif pendant 1 mn.

Le degré de purification des impuretés toxiques a été évalué selon le pourcentage entre la concentration de ces impuretés dans l'eau initiale et celle dans l'eau après la traversée du dispositif. L'efficacité d'épuration de la pollution microbiologique a été définie d'après la teneur en organismes de l'eau épurée.

Le fonctionnement du dispositif est également montré en prenant des exemples concrets.

EXEMPLE 1' :

Le tube extérieur comprend les couches suivantes :
- un matériau fibreux d'échange cationique avec une capacité d'échange d'au moins 4,5 mg.éq./g (polymère à base de polyacrylonitrile assemblé par couture) ;
- un matériau fibreux d'échange anionique avec une capacité d'échange d'au moins 2,0 mg.éq./g (copolymère d'acrylonitrile et vinylpyridine) ;
- un matériau adsorbant carboné avec une surface totale des pores d'au moins 1100 m²/g et un volume des pores d'au moins 0,4 cm³/g sous forme de granulés d'une taille allant de 0,3 à 1,0 mm. Les rapports volumiques des couches du tube extérieur sont 1:1:1.

Le tube intérieur comprend les couches suivantes :
- un matériau adsorbant à base de carbone, le même que celui qui se trouve dans le tube externe,
- de la résine échangeuse d'anions contenant de l'iode et fortement basique de marque SIA-1 avec des granulés d'une taille de 0,3 à 1,0 mm d'une formule de base R-CH$_2$-N$^+$I$^-_n$, où R est un copolymère de styrol et de bivinylbenzène, avec n = 3-7 ;
- une couche de matériau fibreux d'échange anionique ;
- éventuellement une couche de matériau fibreux d'échange cationique ;
- une couche formée d'un mélange de matériau adsorbant carboné sous forme de granulés d'une taille de 0,3 à 1,0 mm avec une surface totale des pores d'au moins 1100 m²/g et un volume de micropores d'au moins 0,4 cm³/g et de matériau adsorbant contenant de l'argent sous forme d'un adsorbant carboné imprégné d'argent avec une surface totale des pores d'au moins 1100 m²/g, un volume des micropres d'au moins 0,4 cm³/g et une teneur en argent de 1% par rapport à la masse du matériau. Le rapport volumique des composants du mélange est de 1:1.

Le rapport volumique des couches du tube interne est de 1:3:2:3:0,5. La capacité de service du dispositif est de 30 1. La vitesse de passage de l'eau est de 145 ml/mn. Les renseignements sur la désinfection et la purification de l'eau sont présentés dans les tableaux 1 à 3.

EXEMPLE 2' :

Les tubes interne et externe contiennent des couches analogues à celles décrites dans l'exemple 1, mais le matériau adsorbant carboné est sous forme fibreuse avec un poids d'au moins 500 g/m², et le matériau adsorbant contenant de l'argent est sous forme de matériau d'échange cationique en granulés avec une capacité d'échange d'au moins 2,0 mg.éq./g, contenant de l'Ag$^+$ en qualité d'ion inverse. Dans ce cas, le rapport volumique des couches dans le premier tube est de 2:3:2, et dans le deuxième tube de 2:5:3:6:2. La capacité de service est de 25 1. La vitesse de passage de l'eau est de 140 ml/mn.

EXEMPLE 3' :

Les tubes contiennent des couches analogues à l'exemple 2, mais le matériau adsorbant contenant de l'argent se présente sous forme d'un matériau fibreux d'échange cationique avec une capacité d'échange d'au moins 2,0 mg.éq./g. Les rapports volumiques des couches dans le tube extérieur sont de 1:1:2, et dans le tube interne, ils sont de 1:5:2:6:2. La capacité de service est de 25 l. La vitesse de passage de l'eau est de 135 ml/mn.

Les exemples donnés montrent que le dispositif permet l'obtention d'une eau potable, correspondant aux réglementations sanitaires et hygiéniques;

L'élimination efficace des pollutions parasitaires est de 100 %. Dans tous les exemples l'échantillon d'eau à l'entrée comprenne dans 1 litre des oeufs d'ascaris - 5, des cystes de lamblia - 5, des oocystes de cryptospodes - 10, et à la sortie la concentration des germes pathogènes est dans tous les cas égale à 0.

L'élimination efficace des radionucléides, de $Hg^{++}$, $Pb^{++}$, $Cd^{+++}$, $Sr^{++}$, $Cs^+$, des pesticides est dans tous les cas de 96 à 98 % à partir de la contagion initiale de l'eau égale à 2 CMA.

Les résultats obtenus à partir des dispositifs selon les exemples 1', 2' et 3' précités sont rassemblés dans les tableaux 2 à 4 ci-après, respectivement en ce qui concerne l'épuration et la désinfection des polluants bactériens de l'eau, de l'élimination des phages et des virus, et de l'épuration des matières toxiques.

**Tableau 2**   EFFICACITE DU DISPOSITIF D'EPURATION ET DE DESINFECTION DES POLLUANTS BACTERIENS DE L'EAU

| Volume d'eau passé | Indices | Eau à l'entrée | Exemple 1′ | | Exemple 2′ | | Exemple 3′ | |
|---|---|---|---|---|---|---|---|---|
| | | | Eau à la sortie | Efficacité de l'épuration, % | Eau à la sortie | Efficacité de l'épuration, % | Eau à la sortie | Efficacité de l'épuration, % |
| 5 l | E. coli, cellules/1 l | 80.000 | <3 | 100 | <2 | 100 | <3 | 100 |
| | Indice microbien total, cellules/ml | 320 | 8 | 97,5 | 6 | 98,5 | 7 | 98,1 |
| | Pseudomonas dans 1 l | 0 | 0 | 100 | 0 | 100 | 0 | 100 |
| | Salmonelles, cellules dans 1 l | 240 | 0 | 100 | 0 | 100 | 0 | 100 |
| 10 l | E. coli, cellules/1 l | 70.000 | <3 | 100 | <2 | 100 | <3 | 100 |
| | Indice microbien total, cellules/ml | 250 | 7 | 97,2 | 8 | 97,5 | 6 | 98,5 |
| | Pseudomonas dans 1 l | 36 | 0 | 100 | 0 | 100 | 0 | 100 |
| | Salmonelles, cellules dans 1 l | 85 | 0 | 100 | 0 | 100 | 0 | 100 |
| 25 l | E. coli, cellules/1 l | 60.000 | <3 | 100 | <2 | 100 | <3 | 100 |
| | Indice microbien total, cellules/ml | 110 | 8 | 92,7 | 7 | 98,1 | 8 | 97,5 |
| | Pseudomonas dans 1 l | 23 | 0 | 100 | 0 | 100 | 0 | 100 |
| | Salmonelles, cellules dans 1 l | 25 | 0 | 100 | 0 | 100 | 0 | 100 |

TABLEAU 3   EFFICACITE DU DISPOSITIF EN ELIMINATION HORS DE L'EAU DES PHAGES ET DES VIRUS

| Volume d'eau passé, en l | Concentration de phages à l'entrée, BOE. | Exemple 1′ | | Exemple 2′ | | Exemple 3′ | | Concentration du virus à l'entrée, TCD. 50/ml | Exemple 1′ | | Exemple 2′ | | Exemple 3′ | |
|---|---|---|---|---|---|---|---|---|---|---|---|---|---|---|
| | | Sortie | Efficacité, % | Sortie | Efficacité, % | Sortie | Efficacité, % | | Sortie | Efficacité, % | Sortie | Efficacité, % | Sortie | Efficacité, % |
| 5 | 7,7.10 | 0 | 100 | 0 | 100 | 0 | 100 | 3,55+0,23 | 0 | 100 | 0 | 100 | 0 | 100 |
| 10 | 7,7.10 | 0 | 100 | 0 | 100 | 0 | 100 | 3,55+0,23 | 0 | 100 | 0 | 100 | 0,5 | 99,9 |
| 25 | 7,7.10 | 0 | 100 | 0 | 100 | 0 | 100 | 3,55+0,23 | 0 | 100 | 0 | 100 | 0 | 100 |

EP 0 681 993 A1

Tableau 4

## Épuration des matières toxiques

| Quantité d'eau passée en litres | Matières toxiques | Concentration en matières toxiques | | | |
|---|---|---|---|---|---|
| | | | A la sortie | | |
| | | A l'entrée | Exemple 1´ | Exemple 2´ | Exemple 3´ |
| | | | A la sortie | A la sortie | A la sortie |
| 10 | Métaux lourds et radionucléides | 2 CMA | <0,3 CMA | <0,2 CMA | <0,3 CMA |
| | $Hg^{++}$ | 3 CMA | <0,5 CMA | <0,5 CMA | <0,4 CMA |
| | $Pb^{++++}$ | 3 CMA | <0,5 CMA | <0,4 CMA | <0,5 CMA |
| | $Cd^{+++}$ | 3 CMA | <0,5 CMA | <0,5 CMA | <0,3 CMA |
| | $Sr^{++}$ | 3 CMA | <0,5 CMA | <0,5 CMA | <0,3 CMA |
| | $Cs^{+}$ | 3 CMA | <0,5 CMA | <0,5 CMA | <0,3 CMA |
| | Pesticides | 5 CMA | <0,3 CMA | <0,4 CMA | <0,3 CMA |
| | Chlore libre et combiné | 2 CMA | <0,1 CMA | <0,1 CMA | <0,1 CMA |
| 25 | Métaux lourds et radionucléides | 2 CMA | <0,4 CMA | <0,3 CMA | <0,5 CMA |
| | $Hg^{++}$ | 3 CMA | <0,5 CMA | <0,5 CMA | <0,8 CMA |
| | $Pb^{++++}$ | 3 CMA | <0,8 CMA | <0,6 CMA | <0,6 CMA |
| | $Cd^{+++}$ | 3 CMA | <0,6 CMA | <0,8 CMA | <0,8 CMA |
| | $Sr^{++}$ | 3 CMA | <0,6 CMA | <0,8 CMA | <0,6 CMA |
| | $Cs^{+}$ | 3 CMA | <0,6 CMA | <0,8 CMA | <0,6 CMA |
| | Pesticides | 5 CMA | <0,4 CMA | <0,5 CMA | <0,4 CMA |
| | Chlore libre et combiné | 2 CMA | <0,1 CMA | <0,2 CMA | <0,1 CMA |

CMA = Concentration maximum admise

EP 0 681 993 A1

**Revendications**

1. Dispositif multicouches pour la désinfection et la purification de l'eau, du type comportant au moins un matériau échangeur d'ions caractérisé en ce qu'il comporte :
   - au moins une couche de résine échangeuse d'ions contenant de l'iode et fortement basique ;
   - au moins une couche de matériau adsorbant contenant de l'argent ou de mélange d'un matériau adsorbant carboné et d'un matériau adsorbant contenant de l'argent.

2. Dispositif selon la revendication1, caractérisé en ce qu'il comporte :
   - au moins une couche de matériau adsorbant à base de carbone ayant une surface totale des pores d'au moins 1100 m²/g et un volume des pores d'au moins 0,4 cm³/g ;
   - et/ou au moins une couche d'un matériau d'échange cationique ayant une capacité d'échange d'au moins 4,5 mg éq/g ;

3. Dispositif selon la revendication 2, caractérisé en ce que le matériau adsorbant à base de carbone se présente sous forme de granulés d'une taille allant de 0,3 à 1,0 mm.

4. Dispositif selon la revendication 2, caractérisé en ce que le matériau adsorbant à base de carbone se présente sous forme de fibres dont le poids est d'au moins 500g/m².

5. Dispositif selon une des revendications 2 à 4, caractérisé en ce qu'il comporte, en amont et/ou en aval de ladite couche de résine échangeuse d'ions, une couche dudit matériau d'échange cationique séparant la couche de résine d'au moins une couche de matériau adsorbant à base de carbone.

6. Dispositif selon une des revendications précédentes, caractérisé en ce que la résine échangeuse d'ions contenant de l'iode et fortement basique a une composition granulométrique de 0,3 à 1,0 mm.

7. Dispositif selon une des revendications précédentes, caractérisé en ce que le matériau adsorbant contenant de l'argent se présente sous forme d'adsorbant carboné imprégné d'argent avec une surface totale des pores d'au moins 1100 m²/g, un volume des micropores d'au moins 0,4 cm³/g.

8. Dispositif selon une des revendications précédentes, caractérisé en ce que le matériau contenant de l'argent se présente sous forme d'un matériau d'échange cationique en granulés ou en fibres avec une capacité d'échange d'au moins 2,0 mg éq./g et contenant de l'$Ag^+$ en qualité d'ion inverse.

9. Dispositif selon une des revendications précédentes, caractérisé en ce qu'il comporte également au moins une couche d'un matériau d'échange anionique.

10. Dispositif selon une des revendications précédentes, caractérisé en ce que le matériau d'au moins une couche d'échange cationique et/ou d'au moins une couche d'échange anionique est un matériau fibreux.

11. Dispositif selon une des revendications précédentes, caractérisé en ce qu'il comporte un corps de cartouche dans lequel sont disposées lesdites couches dans l'ordre suivant dans le sens du parcours de l'eau à purifier : une couche de matériau adsorbant à base de carbone, une couche de matériau d'échange cationique, une couche d'une dite résine échangeuse d'ions contenant de l'iode et fortement basique, et une couche d'un dit matériau adsorbant contenant de l'argent.

12. Dispositif selon une des revendications précédentes, caractérisé en ce qu'il comporte un corps de cartouche dans lequel sont disposées lesdites couches dans l'ordre suivant dans le sens de parcours de l'eau à purifier : une couche a d'une dite résine échangeuse d'ions contenant de l'iode et fortement basique, une couche b de matériau d'échange cationique, au moins une couche c de matériau adsorbant carboné, et une couche d d'un dit matériau adsorbant contenant de l'argent.

13. Dispositif selon la revendication 12, caractérisé en ce qu'il comporte, en amont de ladite couche de résine échangeuse d'ions, successivement une couche $\alpha_1$ de matériau adsorbant à base de carbone et une couche $\alpha_2$ de matériau d'échange cationique.

**14.** Dispositif selon une des revendications 12 ou 13, caractérisé en ce que ladite au moins une couche de matériau adsorbant à base de carbone comporte successivement une couche $c_1$ de matériau fibreux adsorbant carboné et une couche $c_2$ de matériau adsorbant à base de carbone.

**15.** Dispositif selon la revendication 14, caractérisé en ce que le rapport volumique des couches est compris entre les valeurs suivantes, dans l'ordre des couches :
- 1,4 à 2,1 pour ladite couche $\alpha_1$ de matériau adsorbant carboné ;
- 0,5 et 1 pour ladite couche $\alpha_2$ de matériau d'échange cationique ;
- 2,5 et 3 pour ladite couche $\alpha$ de résine échangeuse d'ions contenant de l'iode et fortement basique ;
- 1 par définition, pour la couche $b$ de matériau d'échange cationique prise comme référence ;
- 1,4 et 2,1 pour ladite couche $c_1$ de matériau fibreux adsorbant à base de carbone ;
- 4 et 6 pour ladite couche $c_2$ de matériau adsorbant à base de carbone ;
- 3 et 5 pour ladite couche $d$ de matériau adsorbant contenant de l'argent.

**16.** Dispositif selon la revendication 15, caractérisé en ce que les couches sont dans le rapport volumique suivant :

| | |
|---|---|
| $\alpha_1$ | 2,1 |
| $\alpha_2$ | 1 |
| a | 2,5 |
| b | 1 (par définition) |
| $c_1$ | 1,4 |
| $c_2$ | 6 |
| d | 3 |

**17.** Dispositif selon la revendication 15, caractérisé en ce que les couches sont dans le rapport volumique suivant :

| | |
|---|---|
| $\alpha_1$ | 1,4 |
| $\alpha_2$ | 0,5 |
| a | 3 |
| b | 1 (par définition) |
| $c_1$ | 2,1 |
| $c_2$ | 4 |
| d | 5 |

**18.** Dispositif selon la revendication 15, caractérisé en ce que les couches sont dans le rapport volumétrique suivant :

| | |
|---|---|
| $\alpha_1$ | 1,4 |
| $\alpha_2$ | 1 |
| a | 3 |
| b | 1 (par définition) |
| $c_1$ | 2,1 |
| $c_2$ | 4 |
| d | 3 |

**19.** Dispositif selon une des revendications 1 à 16, caractérisé en ce qu'il comporte un tube externe présentant une pluralité de couches de désinfection et/ou de purification et un tube interne déplaçable dans le tube externe et comportant également une pluralité de couches de désinfection et/ou de purification.

**20.** Dispositif selon la revendication 19, caractérisé en ce que, en aval du tube extérieur dans le sens d'écoulement de l'eau est formée une surface conique interne, et en amont du tube interne est formée une surface conique externe, lesdites surfaces coniques étant superposables par déplacement du tube interne dans le tube externe pour former une jonction étanche.

**21.** Dispositif selon une des revendications 19 ou 20, caractérisé en ce que le tube externe comporte, dans le sens d'écoulement de l'eau, successivement une couche de matériau, de préférence fibreux, d'échange cationique, de matériau d'échange anionique et de matériau adsorbant à base de carbone.

**22.** Dispositif selon la revendication 21, caractérisé en ce que le rapport volumique desdites couches du tube externe est compris entre les valeurs suivantes :
- 1 et 2 pour la couche de matériau d'échange cationique,
- 1 et 3 pour la couche de matériau d'échange anionique,
- et 1 et 2 pour la couche de matériau adsorbant à base de carbone.

23. Dispositif selon une des revendications 19 à 22, caractérisé en ce que le tube interne comporte, dans le sens d'écoulement de l'eau, successivement une couche a' d'un dit matériau adsorbant carboné, une couche b' de résine échangeuse d'anions contenant de l'iode et fortement basique, une couche c' de matériau, de préférence fibreux, d'échange cationique, une couche d' de matériau, de préférence fibreux, d'échange anionique, et une couche e' de mélange de matériau adsorbant à base de carbone et d'un dit matériau adsorbant contenant de l'argent.

24. Dispositif selon la revendication 23, caractérisé en ce que le rapport volumique desdites couches est compris entre 1 et 2 pour la couche a', 3 et 5 pour la couche b', 2 et 3 pour la couche c', 3 et 6 pour la couche d', 0,5 et 2 pour la couche e'.

FIG. 1a

FIG. 1b

16

FIG.2

FIG.3

FIG.4

FIG.5

EP 0 681 993 A1

Office européen
des brevets

**RAPPORT DE RECHERCHE EUROPEENNE**

Numero de la demande
EP 95 40 1079

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US-A-4 769 143 (DEUTSCH) 6 Septembre 1988 * colonne 1, ligne 58 - colonne 3, ligne 27 * --- | 1 | C02F1/42 C02F9/00 C02F1/00 C02F1/76 C02F1/50 B01J47/02 B01J47/00 |
| A | WO-A-93 18837 (SPANGRUD) 30 Septembre 1993 * page 5, ligne 5 - page 7, ligne 20 * --- | 1 | |
| A | US-A-5 061 367 (HATCH) 29 Octobre 1991 * colonne 7, ligne 38 - colonne 8, ligne 42 * --- | 1,2,5,11 | |
| A | PATENT ABSTRACTS OF JAPAN vol. 16 no. 180 (C-0935) & JP-A-04 022488 (OHIRA KOZO) 27 Janvier 1992, * abrégé * --- | 4,10 | |
| A | DATABASE WPI Week 9509 Derwent Publications Ltd., London, GB; AN 95-065798 GELIS V M & SU-A-1 834 703 (PENZIN) , 15 Août 1993 * abrégé * --- | 8 | |
| A | DE-A-15 17 508 (BERKEFELD-FILTER GES.) 11 Décembre 1969 * page 7; revendications 1-3 * --- | 10 | |
| X | GB-A-2 196 329 (PRE-MAC) 27 Avril 1988 * page 1, ligne 112-125 * --- | 1 | |
| A | US-A-1 000 332 (DYER) 8 Août 1911 * abrégé * ----- | 19 | |

**DOMAINES TECHNIQUES RECHERCHES (Int.Cl.6)**

C02F
B01J

Le présent rapport a été établi pour toutes les revendications

| Lieu de la recherche | Date d'achèvement de la recherche | Examinateur |
|---|---|---|
| LA HAYE | 18 Août 1995 | Wendling, J-P |

**CATEGORIE DES DOCUMENTS CITES**

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EP O FORM 1503 03.82 (P04C02)

18